# EUROPÄISCHE PATENTSCHRIFT

(11) **EP 3 800 976 B1**
(45) Veröffentlichungstag und Bekanntmachung des Hinweises auf die Patenterteilung: **06.08.2025**
(21) Anmeldenummer: 19733661.3
(22) Anmeldetag: 05.06.2019
(51) Int. Cl.: A01B 63/32, A01B 73/04, A01B 49/02

(54) **LANDWIRTSCHAFTLICHES BODENBEARBEITUNGSGERÄT UND VERFAHREN ZU DESSEN BETRIEB**
AGRICULTURAL TILLAGE IMPLEMENT AND METHOD FOR THE OPERATION THEREOF
APPAREIL AGRICOLE DE TRAVAIL DU SOL ET PROCÉDÉ PERMETTANT DE FAIRE FONCTIONNER LEDIT APPAREIL

(30) Priorität: 08.06.2018 DE 102018209193
(43) Veröffentlichungstag der Anmeldung: 14.04.2021
(73) Patentinhaber: Lemken GmbH & Co KG, 46519 Alpen (DE)
(72) Erfinder: PAULESSEN, Georg, 47877 Willich (DE); KOCH, Florian, 46485 Wesel (DE); VAN HAAREN, Josef, 47546 Kalkar (DE)
(86) Internationale Anmeldenummer: PCT/DE2019/100500
(87) Internationale Veröffentlichungsnummer: WO 2019/233529

(56) Entgegenhaltungen:
- EP-A2- 1 616 471
- WO-A1-2005/115124
- WO-A1-2013/030183
- CA-A- 1 231 577
- DE-A1- 102007 052 353
- US-A1- 2015 271 981
- US-B1- 7 073 604

## Beschreibung

Die vorliegende Erfindung betrifft ein Bodenbearbeitungsgerät zum Anbau an eine landwirtschaftliche Maschine, ein System aus einem solchen Bodenbearbeitungsgerät und einer landwirtschaftlichen Maschine und ein Verfahren zum Betreiben eines solchen Bodenbearbeitungsgeräts bzw. Systems. Als Bodenbearbeitungsgerät wird im vorliegenden Zusammenhang insbesondere ein Zinkengerät wie ein Grubber, eine Egge wie eine Scheibenegge, insbesondere Kurzscheibenegge, oder Kreiselegge, ein Aussaatgerät wie eine Sämaschine, eine Einzelkornsämaschine oder eine Drillmaschine, eine Saatbeetkombination, ein Mulcher oder eine Hacke, insbesondere eine Rollhacke verstanden. Weiterhin werden auch Kombinationen der vorgenannten Geräte als Bodenbearbeitungsgerät verstanden. Mähwerke, Heuwender oder Häcksler sind hingegen im vorliegenden Zusammenhang nicht als Bodenbearbeitungsgeräte zu verstehen.

Das Bodenbearbeitungsgerät weist einen Rahmen auf, der zumindest zwei quer zu einer Fahrtrichtung des Bodenbearbeitungsgeräts benachbart angeordnete Rahmenteile aufweist und durch zumindest einen Aktor zwischen einer Arbeitsposition und einer Transportposition umstellbar ist, indem zumindest eins der Rahmenteile zwischen einer abgesenkten Stellung und einer angehobenen Stellung um eine Drehachse kippbar ist, um in der Transportposition eine quer zur Fahrtrichtung kleinere Ausdehnung des Bodenbearbeitungsgeräts als in der Arbeitsposition aufzuweisen. Der zumindest eine Aktor kann einteilig, z.B. ein einzelner Hydraulikzylinder oder Elektroantrieb, oder mehrteilig, z.B. durch mehrere parallelgeschaltete Hydraulikzylinder oder Elektroantriebe oder auch sich teleskopisch oder anders ergänzende Hydraulikzylinder oder Elektroantriebe, ausgebildet sein.

Die Rahmenteile weisen ferner jeweils zumindest ein Werkzeug zur Bodenbearbeitung auf.

Solche Bodenbearbeitungsgeräte, beispielsweise Scheibeneggen, Grubber oder Sämaschinen, werden dazu verwendet, den Boden großer Felder zu bearbeiten. Je breiter das Bodenbearbeitungsgerät wird, desto weniger weit muss das entsprechende Bodenbearbeitungsgerät über das Feld gezogen werden, um dessen gesamten Boden zu bearbeiten, weil in einem Durchgang eine größere Fläche bearbeitet wird.

Daraus resultiert ein Bedürfnis nach größeren Arbeitsbreiten, da auf diese Weise eine effizientere und damit kostengünstigere Bearbeitung des Bodens möglich ist. Große Arbeitsbreiten solcher Bodenbearbeitungsgeräte haben aber den Nachteil, dass sie höhere Anforderungen an die Ebenheit des zu bearbeitenden Bodens stellen. Krümmungen oder ein kupiertes Bodenrelief stellen für Bodenbearbeitungsgeräte ein umso ernsteres Problem dar, je größer die Arbeitsbreite des Bodenbearbeitungsgeräts ist. Denn eine Divergenz zwischen der Anordnung der Werkzeuge, beispielsweise der Hohlscheiben einer Scheibenegge, und dem Verlauf der Bodenoberfläche führt dazu, dass keine ganzflächige homogene Bearbeitung des Bodens möglich ist. Ziel ist es aber, eine möglichst homogene Bearbeitung des Bodens auch bei großer Arbeitsbreite zu gewährleisten.

Aus diesem Problem entstanden im Stand der Technik Bodenbearbeitungsgeräte, die eine Möglichkeit zur Anpassung an das Bodenrelief quer zur Fahrtrichtung bieten.

Bei einer existierenden Lösung wird die große Arbeitsbreite durch einen zweiteiligen Rahmen abgedeckt. Jedes der beiden Rahmenteile dieses Rahmens ist um eine parallel zur Fahrtrichtung ausgerichtete Drehachse pendelnd aufgehängt. Somit ist es möglich, dem Relief des Bodens bei dessen Bearbeitung durch eine Änderung der Neigung des jeweiligen Rahmenteils zu folgen und eine verglichen mit einem einteiligen Rahmen gleicher Breite gleichmäßigere Bodenbearbeitung zu erzielen.

Dieses System lässt sich jedoch nicht ohne weiteres auf Konzepte erweitern, deren Rahmen mehr als zwei Rahmenteile aufweisen. Es ist also darauf beschränkt, eine bestimmte Arbeitsbreite und eine bestimmte Genauigkeit nicht übertreffen zu können. Dieses System bildet den Ausgangspunkt der vorliegenden Erfindung.

Ein hiervon grundsätzlich unabhängiges System ist aus US 2015/0129255 A1 bekannt. Dieses Dokument offenbart ein Anbaugerät, bei dem ein mehrteiliger Rahmen mit daran angebrachten Werkzeugen durch mehrere Aktoren zwischen einer Arbeitsposition und einer Transportposition umstellbar ist, indem die einzelnen Teile des Rahmens quer zur Fahrtrichtung des Anbaugeräts um Drehachsen gekippt und somit aufeinander gefaltet werden, um auf eine seitliche Ausdehnung reduziert werden zu können, mit der eine Benutzung einer öffentlichen Straße möglich ist. Eine Höhe der Rahmenteile über dem Boden kann bei der Konstruktion gemäß US 2015/0129255 A1 durch gezielte Ansteuerung der das Rahmenteil tragenden Stützräder erfolgen. Hierdurch wird zwar eine Anpassung des Anbaugeräts an das Relief des Bodens auch für Rahmen aus mehr als zwei Teilen möglich, diese Lösung erfordert aber viele zusätzliche Aktoren und Hebelmechanismen sowie entsprechende Stützräder, um die Höhenverstellung der Rahmenteile zu ermöglichen.

Die Schriften US2015271981A1 und WO2005115124A1 beschreiben zusätzliche bekannte Bodenbearbeitungsgeräte.

Vor dem Hintergrund des Stands der Technik liegt eine Aufgabe der vorliegenden Erfindung darin, ein Bodenbearbeitungsgerät des obigen technischen Gebiets bereitzustellen, das eine möglichst große Arbeitsbreite mit ganzflächig möglichst homogener Bodenbearbeitungsqualität und möglichst einfacher Konstruktion verbindet. Eine Lösung dieser Aufgabe wird durch Anspruch 1 bzw. Anspruch 10 angegeben. Vorteilhafte Weiterbildungen der Erfindung sind Gegenstand der Unteransprüche.

Eine weitere Aufgabe besteht darin, ein Bodenbearbeitungsgerät so zu betreiben, dass eine möglichst große Arbeitsbreite mit ganzflächig möglichst homogener Bodenbearbeitungsqualität bei möglichst einfacher Konstruktion des Bodenbearbeitungsgeräts gewährleistet ist. Eine Lösung dieser Aufgabe wird durch Anspruch 11 angegeben. Vorteilhafte Weiterbildungen der Erfindung sind Gegenstand der Unteransprüche.

Das erfindungsgemäße Bodenbearbeitungsgerät ist dazu ausgestaltet, zumindest eins der Rahmenteile derart durch den Aktor anzuheben oder abzusenken, dass der Abstand oder die Eindringtiefe einen vorbestimmten Wert annimmt. Dies wird unter anderem auch dadurch möglich, dass die Rahmenteile jeweils zumindest einer Abstandsbestimmungsvorrichtung zum Bestimmen eines Abstands des Werkzeugs zum Boden bzw. einer Eindringtiefe des Werkzeugs in den Boden zugeordnet sind. Auf der Grundlage des bestimmten Abstands bzw. der bestimmten Eindringtiefe kann der Aktor das Rahmenteil anheben bzw. absenken, um den vorbestimmten Abstand bzw. die vorbestimmte Eindringtiefe zu erreichen.

Ein Rahmenteil kann einer Abstandsbestimmungsvorrichtung dadurch zugeordnet sein, dass die Abstandsbestimmungsvorrichtung am Rahmenteil angeordnet ist. Daneben kann das Rahmenteil der Abstandsbestimmungsvorrichtung aber auch dadurch zugeordnet sein, dass ein von der Abstandsbestimmungsvorrichtung ausgegebenes Signal sich auf das zugeordnete Rahmenteil bezieht, d.h. eine Betätigung des Aktors des zugeordneten Rahmenteils betrifft. Das Rahmenteil kann einer Abstandsbestimmungsvorrichtung auch durch eine direkte oder indirekte Wirkverbindung zugeordnet sein. Neben einer direkten Kopplung als Wirkverbindung kann diese auch über ein Element oder mehrere Elemente, das bzw. die zwischen dem Rahmenteil und der Abstandsbestimmungsvorrichtung angeordnet sind und/oder eine Wirkverbindung zwischen dem Rahmenteil und der Abstandsbestimmungsvorrichtung bildet bzw. bilden, realisiert werden. Ein zwischen dem Rahmenteil und der Abstandsbestimmungsvorrichtung angeordnetes Fahrwerk oder Rahmenelement steht einer Zuordnung zwischen dem Rahmenteil und der Abstandsbestimmungsvorrichtung nicht entgegen.

Es wird also erfindungsgemäß derjenige Aktor, der beim Bodenbearbeitungsgerät zum Umstellen zwischen der Arbeitsposition und der Transportposition durch Anheben bzw. Absenken eines der Rahmenteile vorgesehen ist, so ausgestaltet, dass er das Rahmenteil auch so anhebt bzw. absenkt, dass der Abstand des Werkzeugs zum Boden bzw. die Eindringtiefe des Werkzeugs in den Boden einen vorbestimmten Wert annimmt. Somit ist es also nicht erforderlich, einen zusätzlichen Aktor oder Hebelmechanismus zum Anheben oder Absenken des Rahmenteils anzubauen oder zu integrieren. Dies spart Gewicht und Kosten.

Bei der landwirtschaftlichen Maschine handelt es sich üblicherweise um einen Schlepper, es kann sich jedoch auch um einen Mähdrescher oder eine andere landwirtschaftliche Maschine handeln, an die ein Bodenbearbeitungsgerät angebaut werden kann.

Der Rahmen kann ferner vorzugsweise mehr als zwei, mindestens also drei Rahmenteile aufweisen, die quer zur Fahrtrichtung des Bodenbearbeitungsgeräts benachbart angeordnet sind. Bei einer ungeraden Zahl von Rahmenteilen kann vorzugsweise ein Mittelteil vorgesehen sein, dessen Breite so bemessen ist, dass ein Zusammenfalten des Rahmens auf das Mittelteil zu einer Gesamtbreite des Bodenbearbeitungsgeräts führt, die höchstens die für die Benutzung öffentlicher Straßen zugelassene Breite erreicht.

Bei dem Aktor kann es sich insbesondere um einen Hydraulikzylinder als eine bevorzugte Ausführungsform eines Arbeitszylinders handeln. Neben einem Hydraulikzylinder ist auch ein Pneumatikzylinder als mögliche Ausführungsform eines Arbeitszylinders denkbar und alternativ zu einem Arbeitszylinder kann auch ein elektrischer Antrieb, beispielsweise ein Elektromotor in Form eines Linearmotors oder dergleichen, vorgesehen sein.

Die Arbeitsposition des Bodenbearbeitungsgeräts ist üblicherweise eine Position, in der das Bodenbearbeitungsgerät seine maximale seitliche, d.h. sich quer zur Fahrtrichtung erstreckende, Ausdehnung erreicht. Diese horizontale Ausdehnung entspricht im Wesentlichen auch der Arbeitsbreite des Bodenbearbeitungsgeräts und ist in der Arbeitsposition somit möglichst maximiert. Dies dient dazu, eine möglichst effiziente Bearbeitung des Bodens zu erzielen. Von der streng horizontalen Ausrichtung kann der Rahmen, insbesondere einzelne Rahmenteile, vor allem dann abweichen, wenn dies dazu dient, dem Bodenrelief besser zu folgen. Dies wird vor allem bei kupiertem Gelände oder bei natürlichen Unebenheiten des zu bearbeitenden Bodens auftreten. In diesem Fall sind die Rahmenteile in der Arbeitsposition immer noch im Wesentlichen horizontal ausgerichtet, wobei Abweichungen von der Horizontalen aufgrund des Bodenreliefs erlaubt sind.

Demgegenüber ist der Rahmen in der Transportposition so weit wie möglich quer zur Fahrtrichtung zusammengefaltet. Dies kann beispielsweise dadurch erreicht werden, dass einzelne Rahmenteile im Wesentlichen aufgerichtet sind. Diese Rahmenteile können um einen Winkel von mehr als 90° aufgestellt worden sein, so dass sie in der Transportposition nach innen geneigt sind, um einen sichereren Transport zu ermöglichen und die seitliche Ausdehnung im oberen Bereich des Bodenbearbeitungsgeräts weiter zu reduzieren. Es ist ferner möglich, dass einzelne Rahmenteile durch das Umstellen aufeinandergelegt werden und somit einen Stapel mehr oder weniger horizontal ausgerichteter Rahmenteile bilden. Die konkrete Stellung der einzelnen Rahmenteile in der Transportposition hängt insbesondere auch davon ab, in wie viele Rahmenteile sich der Rahmen gliedert.

In einer Ausführungsform umfasst der Rahmen drei Rahmenteile, ein Mittelteil und zwei Seitenteile, wobei die beiden Seitenteile im Wesentlichen vertikal aufgerichtet sind und die Breite des Bodenbearbeitungsgeräts quer zur Fahrtrichtung im Wesentlichen der seitlichen Ausdehnung des Mittelteils entspricht. Solche Ausführungsformen sind aus dem Stand der Technik grundsätzlich bekannt, wenn auch nicht mit dem erfindungsgemäßen Mechanismus ausgestattet.

Die Drehachse, um die sich die Rahmenteile kippen lassen, um zwischen der Transportstellung und der Arbeitsposition umgestellt zu werden, verläuft bei derartigen Ausführungsformen im Wesentlichen parallel zur Fahrtrichtung des Bodenbearbeitungsgerätes. Bei einer solchen Drehachse ist es nämlich besonders gut möglich, die seitliche Ausdehnung des Bodenbearbeitungsgerätes durch Kippen um die Drehachse zu reduzieren. Es ist allerdings auch möglich, dass die Rahmenteile um mehr als eine Drehachse bzw. eine versetzt ausgebildete Drehachse gekippt werden können, um zwischen der abgesenkten Stellung und der angehobenen Stellung umgestellt zu werden und damit zwischen der Arbeitsposition und der Transportposition hin und her zu wechseln.

Bei dem zumindest einen Werkzeug zur Bodenbearbeitung, das die Rahmenteile jeweils aufweisen, handelt es sich beispielsweise um Hohlscheiben einer Scheibenegge, Grubberzinken eines Grubers oder ähnliche Werkzeuge. Jedes Rahmenteil weist dabei zumindest ein Werkzeug auf, vorzugsweise sind mehrere Werkzeuge am Rahmenteil angeordnet. Die Werkzeuge können dabei in seitliche Richtung beabstandet angeordnet sein.

Bei der Abstandsbestimmungsvorrichtung gemäß der vorliegenden Erfindung kann es sich um eine Vorrichtung handeln, die einen Abstand eines Werkzeugs zum Boden oder eine Eindringtiefe des Werkzeugs in den Boden bestimmt. Ein Beispiel einer solchen Vorrichtung ist eine Nachlaufwalze, die über einen Hebelmechanismus oder einen Tiefenverstellzylinder an dem jeweiligen Rahmenteil gelagert oder dem Rahmenteil anders, beispielsweise durch ihre Position im Wesentlichen (in Fahrtrichtung) hinter dem jeweiligen Rahmenteil zugeordnet ist. Durch den Tiefenverstellzylinder, welcher der Bewegung der Nachlaufwalze folgt, wenn sie ihre relative Position gegenüber dem Rahmenteil oder einem anderen Element des Bodenbearbeitungsgeräts z.B. aufgrund von Bodenunebenheiten ändert, ist es möglich, dass sich der relative Abstand zwischen der Nachlaufwalze und dem Rahmenteil allgemein oder auch lokal verändert.

Dies ist zu unterscheiden von einem starr oder beweglich gelagerten Stützrad, das zwar einen Abstand des Rahmenteils und damit auch des Werkzeugs zum Boden festlegt, diesen aber nicht bestimmt, weil durch das Stützrad keine Rückmeldung dazu erfolgen kann, ob das Stützrad den Boden kontaktiert oder nicht. Nur in dem Zustand, in dem das Stützrad den Boden kontaktiert, entspricht der Abstand des Werkzeugs zum Boden bzw. seine Eindringtiefe in den Boden der Einstellung durch das Stützrad. Das Stützrad ist also keine Abstandsbestimmungsvorrichtung, sondern eine Beabstandungsvorrichtung, die einen bestimmten Mindestabstand hält, wobei hierdurch nicht verhindert wird, dass der tatsächliche Abstand größer als der Mindestabstand ist.

Alternativen zu einer Nachlaufwalze mit Tiefenverstellzylinder können beispielsweise andere mechanische oder optische Vorrichtungen sein, mit denen ein Abstand zwischen einem Rahmenteil oder Werkzeug einerseits und dem Boden andererseits bestimmt werden kann. Hierfür eignen sich beispielsweise Radarsensoren, Infrarotsensoren, Kameras, Neigungssensoren oder ähnliche Vorrichtungen. Die Abstandsbestimmungsvorrichtung muss dazu geeignet sein, einen Abstand des Werkzeugs zum Boden bzw. eine Eindringtiefe des Werkzeugs in den Boden direkt oder indirekt, z.B. über den Abstand und/oder die Neigung des Rahmenteils zum Boden zu bestimmen, sodass hieraus eine Information über diesen Abstand erhältlich ist.

Das Bodenbearbeitungsgerät kann dazu ausgestaltet sein, zumindest eins der Rahmenteile derart durch den Aktor anzuheben oder abzusenken, dass der Abstand oder die Eindringtiefe einen vorbestimmten Wert annimmt, indem eine Steuerung auf dem Bodenbearbeitungsgerät vorgesehen ist. Alternativ kann eine solche Steuerung auch auf der landwirtschaftlichen Maschine angeordnet oder an einem entfernten, separaten Ort vorgesehen sein. Es ist lediglich erforderlich, dass der Abstand des Werkzeugs zum Boden oder die Eindringtiefe des Werkzeugs in den Boden bestimmt werden und auf der Grundlage dieser Information der zumindest eine Aktor betätigt werden kann, um den voreingestellten oder gewünschten Wert einzunehmen.

Besonders bevorzugt wird dieser vorbestimmte Wert nicht nur angenommen, sondern auch gehalten, indem der Aktor den Abstand des Werkzeugs zum Boden bzw. die Eindringtiefe des Werkzeugs in den Boden kontinuierlich oder in Intervallen nachjustiert. In diesem Fall ist der Abstand oder die Eindringtiefe im regelungstechnischen Sinn auf einen vorbestimmten Wert geregelt, nicht nur gesteuert.

Bei der Steuerung muss es sich nicht um ein separates Element handeln, sondern ihre Funktion kann auch durch ein bereits vorhandenes elektronisches Bauteil durchgeführt werden. Weder die Anordnung noch die genaue strukturelle Ausgestaltung der Steuerung ist für die vorliegende Erfindung von maßgeblicher Bedeutung.

Damit das Bodenbearbeitungsgerät dazu ausgestaltet ist, zumindest eins der Rahmenteile derart durch den Aktor anzuheben oder abzusenken, dass der Abstand oder die Eindringtiefe einen vorbestimmten Wert annimmt, genügt auch alternativ zu einer eigenen Steuerung ein Anschluss, über den Informationen über den Abstand des Werkzeugs zum Boden oder die Eindringtiefe des Werkzeugs in den Boden ausgelesen und Betätigungsbefehle für den zumindest einen Aktor aufgenommen werden können.

Bevorzugt weisen die Rahmenteile zumindest drei Rahmenteile, nämlich ein Mittelteil, ein linkes Seitenteil und ein rechtes Seitenteil, auf. Das Mittelteil ist dabei bezogen auf die Fahrtrichtung zentral angeordnet, das linke Seitenteil bezogen auf die Fahrtrichtung links vom Mittelteil angeordnet und das rechte Seitenteil bezogen auf die Fahrtrichtung rechts vom Mittelteil angeordnet. Der Rahmen ist durch zumindest zwei Aktoren zwischen der Arbeitsposition und der Transportposition umstellbar, indem das linke Seitenteil und das rechte Seitenteil zwischen der abgesenkten Stellung und der angehobenen Stellung um jeweils eine Drehachse kippbar sind.

Hierbei handelt es sich um eine besonders bevorzugte Ausführungsform, weil sich die drei Rahmenteile besonders einfach zwischen der Transportposition und der Arbeitsposition umstellen lassen. Dies kann insbesondere schon dadurch erfolgen, dass die beiden Seitenteile aufgerichtet werden, nämlich dann, wenn das Mittelteil eine Breite aufweist, die kleiner als die maximal zulässige Breite eines auf öffentlichen Straßen bewegten Gerätes ist. Gleichzeitig ermöglicht ein dreiteiliges Bodenbearbeitungsgerät bereits eine erhebliche Arbeitsbreite, beispielsweise eine Arbeitsbreite von 9 m, bei vernünftiger Anpassungsfähigkeit an Unebenheiten des Bodens. Der gesamte Rahmen kann beispielsweise in mehr oder weniger gleichmäßige Abschnitte von je etwa 3 m Breite unterteilt werden. In diesem Zusammenhang ist es auch möglich, das Mittelteil etwas kleiner als die beiden Seitenteile auszuführen, um eine geringere seitliche Ausdehnung des Bodenbearbeitungsgerätes in seiner Transportposition zu erreichen. Bei dieser Ausgestaltung können auch die Aktoren besonders leicht zum Anheben und Absenken zumindest der beiden Seitenteile eingesetzt werden, da diese zum Umstellen zwischen Arbeitsposition und Transportposition einfach hochgeklappt werden. Genau diesen Mechanismus kann man übernehmen, um auf Unebenheiten des Bodens zu reagieren.

Bevorzugt weisen die Rahmenteile jeweils mehrere quer zur Fahrtrichtung beabstandet angeordnete Werkzeuge zur Bodenbearbeitung auf und ist die Abstandsbestimmungsvorrichtung dazu ausgebildet, den Abstand oder die Eindringtiefe zumindest zweier der Werkzeuge des jeweiligen Rahmenteils, bevorzugt aller Werkzeuge des jeweiligen Rahmenteils, näherungsweise, bevorzugt mechanisch, zu bestimmen.

Die Abstandsbestimmungsvorrichtung weist bevorzugt eine gegenüber dem jeweiligen Rahmenteil vertikal bewegliche Walze, insbesondere eine Nachlaufwalze, auf, um diesen Abstand oder die Eindringtiefe zu bestimmen. Neben einer Walze sind auch andere Abtastvorrichtungen oder ähnliches geeignet, den Abstand oder die Eindringtiefe mechanisch zu bestimmen. Alternativ zu einer mechanischen Bestimmung des Abstands oder der Eindringtiefe besteht auch die Möglichkeit, den Abstand oder die Eindringtiefe auf Grundlage von elektromagnetischer Strahlung oder optisch durch Sensoren zu bestimmen.

Bei den Werkzeugen kann es sich beispielsweise um Grubberzinken, Hohlscheiben, Rollhacken oder ähnliches handeln. Aber auch andere Werkzeuge sind denkbar. Die vorliegende Erfindung lässt sich grundsätzlich auf eine sehr große Vielzahl von verschiedenen, an einem mehrteiligen Rahmen getragenen Werkzeugen anwenden, wobei Bodenbearbeitungswerkzeuge und andere Werkzeuge, für die das Einhalten eines genauen Abstands zum Boden oder einer genauen Eindringtiefe in den Boden von besonderer Bedeutung sind, einen besonders großen Nutzen aus der Erfindung ziehen.

Die Nutzung einer gegenüber dem Rahmenteil beweglichen Walze, insbesondere einer Nachlaufwalze, wird aber besonders bevorzugt, weil hiermit eine besonders einfache und preiswerte Lösung zur Verfügung steht, die keine aufwändige Auswertung von Messsignalen erforderlich macht und die für das Bodenbearbeitungsgerät erforderliche Genauigkeit bietet.

Vorzugsweise ist die Abstandsbestimmungsvorrichtung dazu ausgebildet, eine Neigung des Bodens gegenüber zumindest einem der Rahmenteile zumindest näherungsweise zu bestimmen.

Die näherungsweise Bestimmung des Abstands oder der Eindringtiefe zweier Werkzeuge kann durch eine näherungsweise Bestimmung der Neigung des Bodens zum jeweiligen Rahmenteil erfolgen. Wenn das jeweilige Rahmenteil, an dem die beiden Werkzeuge angeordnet sind, näherungsweise parallel zum Boden geneigt ist, sind die Abstände oder die Eindringtiefen der beiden Werkzeuge näherungsweise gleich. Dies kann auf verschiedene Weisen erfolgen.

Die näherungsweise Bestimmung der Neigung kann besonders leicht durch eine Walze erfolgen, die an dem dazugehörigen Rahmenteil oder einem diesem zugeordneten Element des Bodenbearbeitungsgeräts angeordnet und gegenüber dem Rahmenteil vertikal beweglich und kippbar ist. Wenn sich die Neigung des Bodens ändert, kann die Walze dem Boden folgen und somit eine Rückmeldung über die relative Neigung des Rahmenteils zum Boden und damit auch über den ungefähren lokalen Abstand vom Boden oder die Eindringtiefe in den Boden zumindest zweier Werkzeuge am dazugehörigen Rahmenteil geben. Alternativ dazu können auch die Neigung des Bodens zu einer Bezugsebene, z.B. zur Horizontalen, und die Neigung des Rahmenteils zu dieser oder einer anderen bekannten Bezugsebene bestimmt werden.

Im Zusammenhang mit der vorliegenden Erfindung wird unter einer näherungsweisen Bestimmung des Abstands, der Eindringtiefe oder der Neigung insbesondere eine lineare Näherung der jeweiligen Messgröße verstanden. Mit anderen Worten wird beispielsweise der Boden im Bereich eines Rahmenteils als gerade, d.h. in zumindest einer Richtung linear verlaufend, angenommen und sein Verlauf somit durch eine lineare Näherung angenähert. Die Neigung des so angenäherten Bodens zum Rahmenteil wird bestimmt und ggf. daraus auf den Abstand oder die Eindringtiefe der Werkzeuge geschlossen.

Die Genauigkeit der Näherung kann durch eine Erhöhung der Anzahl der Rahmenteile bzw. eine Verkleinerung der einzelnen Rahmenteile und ggf. dazu gehörigen Walzen verbessert werden. Dadurch wird der Grad der Näherung bei der näherungsweisen Bestimmung der relativen Neigung des Bodens zum Rahmenteil und damit des Abstands zumindest zweier der Werkzeuge verbessert, weil die Abweichungen des tatsächlichen Bodenverlaufs von der abschnittsweise linearen Näherung insgesamt kleiner sind.

Die Abstandsbestimmungsvorrichtung weist vorzugsweise einen, bevorzugt mehrere, Arbeitszylinder, insbesondere Hydraulikzylinder, auf. Arbeitszylinder sind eine bevorzugte Möglichkeit, den Abstand zwischen dem Rahmenteil und dem Boden zu bestimmen, indem durch den Arbeitszylinder ein den Boden kontaktierendes Rad, eine Walze oder ein Schlitten mit dem Rahmenteil verbunden ist, so dass durch das Ein- und Ausfahren des Arbeitszylinders Informationen über den lokalen Verlauf des Bodens in Bezug auf das jeweilige Rahmenteil erhältlich sind. Durch einen solchen Arbeitszylinder besteht die Möglichkeit, die Information direkt in ein Hydraulik- oder Pneumatiksystem einzukoppeln, mit dem auch die Rahmenteile des Bodenbearbeitungsgeräts angehoben oder abgesenkt werden können.

Alternativ können Sensoren dazu beitragen, den Abstand zwischen dem Rahmenteil und dem Boden bzw. dem Werkzeug zum Boden oder die Eindringtiefe des Werkzeugs in den Boden zu bestimmen, und es können andere Aktoren als Arbeitszylinder eingesetzt werden.

In einer bevorzugten Ausführungsform umfasst der Aktor einen Arbeitszylinder, insbesondere einen Hydraulikzylinder. Hiermit ist gemeint, dass der Aktor, der den Rahmen zwischen der Arbeitsposition und der Transportposition umstellt, als Arbeitszylinder ausgebildet ist. Neben einem Hydraulikzylinder steht als bevorzugter Arbeitszylinder ein Pneumatikzylinder zur Verfügung. Alternativ zu einem Arbeitszylinder kann als Aktor aber auch beispielsweise ein Elektromotor mit entsprechendem Getriebe, beispielsweise als Linearmotor, eingesetzt werden.

Bevorzugt ist das Bodenbearbeitungsgerät eine Egge wie eine Scheibenegge, insbesondere eine Kurzscheibenegge, oder eine Kreiselegge, ein Grubber, eine Saatbeetkombination oder ein Aussaatgerät wie eine Sämaschine, eine Einzelkornsämaschine oder eine Drillmaschine, ein Mulcher oder eine Rollhacke. In diesen Bodenbearbeitungsgeräten ist die Erfindung besonders vorteilhaft nutzbar, weil hier viel Wert auf einen präzisen Abstand der Werkzeuge zum Boden bzw. eine präzise Eindringtiefe der Werkzeuge in den Boden gelegt wird und gleichzeitig besonders große Arbeitsbreiten gewünscht werden, um den Boden effizient bearbeiten zu können. Andere Bodenbearbeitungsgeräte sind aber ebenfalls im Sinne der Erfindung ausbildbar.

Bevorzugt umfassen der Aktor und die Abstandsbestimmungsvorrichtung jeweils einen Hydraulikzylinder, wobei der Hydraulikzylinder des Aktors und der Hydraulikzylinder der Abstandsbestimmungsvorrichtung derart miteinander hydraulisch gekoppelt sind, dass das zumindest eine Rahmenteil immer so angehoben oder abgesenkt wird, dass der Abstand oder die Eindringtiefe konstant bleibt.

Durch eine geeignete hydraulische Verschaltung des Hydraulikzylinders der Abstandsbestimmungsvorrichtung einerseits und desjenigen des Aktors andererseits kann ein elektronischer Steuer- oder Regelaufwand minimiert werden und eine betriebssichere und wartungsarme Ausgestaltung des Bodenbearbeitungsgeräts erhalten werden.

Die Erfindung betrifft ferner ein System aus einer landwirtschaftlichen Maschine und einem Bodenbearbeitungsgerät, wie es oben beschrieben wurde. Das System weist ferner eine Steuervorrichtung auf, wobei die Steuervorrichtung dazu ausgebildet ist, Daten der Abstandsbestimmungsvorrichtung zu empfangen und Daten an den Aktor zu senden, um den Aktor derart zu betätigen, dass das zumindest eine der Rahmenteile angehoben oder abgesenkt wird, um den lokalen Abstand des Rahmenteils zum Boden einzustellen, vorzugsweise einen vorbestimmten lokalen Abstand zu halten.

Die Steuerungsvorrichtung kann Teil des Bodenbearbeitungsgeräts sein, sie kann jedoch auch Teil der landwirtschaftlichen Maschine, beispielsweise also eines Schleppers, sein. Schließlich kann die Steuerungsvorrichtung auch unabhängig vom Bodenbearbeitungsgerät und der landwirtschaftlichen Maschine angeordnet sein oder als virtuelle Steuerungsvorrichtung ausgebildet sein, die auf einem oder mehreren, über eine Datenverbindung erreichbaren Server bzw. Servern bereitgestellt wird.

Daten in diesem Sinne sind auch Informationen über einen ansteigenden oder abfallenden Druck eines Druckmediums, insbesondere Hydraulikflüssigkeit oder Gas, sofern hierdurch direkt oder indirekt Rückschlüsse auf den Abstand des Werkzeugs zum Boden oder die Eindringtiefe des Werkzeugs in den Boden oder ggf. die Neigung möglich sind.

Bei einem erfindungsgemäßen Verfahren zum Betreiben eines an eine landwirtschaftliche Maschine angebauten Bodenbearbeitungsgeräts mit einem Rahmen, der zumindest zwei Rahmenteile und zumindest einen Aktor aufweist, um zumindest eins der Rahmenteile anzuheben oder abzusenken, um den Rahmen dadurch zwischen einer Arbeitsposition und einer Transportposition, in der das Bodenbearbeitungsgerät eine quer zu einer Fahrtrichtung kleinere Ausdehnung als in der Arbeitsposition aufweist, umzustellen, wobei die Rahmenteile jeweils zumindest ein Werkzeug zur Bodenbearbeitung aufweisen, wird ein Abstand des Werkzeugs zum Boden oder eine Eindringtiefe des Werkzeugs in den Boden bestimmt und zumindest eins der Rahmenteile durch den Aktor derart angehoben oder abgesenkt, dass der Abstand oder die Eindringtiefe einen vorbestimmten Wert annimmt.

Das erfindungsgemäße Verfahren macht sich den bereits für das Umstellen zwischen Arbeitsposition und Transportposition vorhandenen Aktor zunutze, um auch eine Anpassung des Abstands des Werkzeugs zum Boden bzw. der Eindringtiefe des Werkzeugs in den Boden durchzuführen. Dies ermöglicht eine besonders effiziente Konstruktion und Nutzung des Bodenbearbeitungsgeräts. Einerseits werden keine zusätzlichen Aktoren zur Anpassung des Abstands bzw. der Eindringtiefe erforderlich, was das Gewicht, den baulichen Aufwand und die damit verbundenen Kosten gering hält. Andererseits kann durch die Nutzung der Aktoren eine relativ genaue Regelung des Abstands bzw. der Eindringtiefe erreicht werden, die eine deutlich homogenere Bodenbearbeitung durch das Bodenbearbeitungsgerät ermöglicht als durch sich ähnlich weit quer zur Fahrtrichtung erstreckende, aber starre Bodenbearbeitungsgeräte.

Bevorzugt wird eine Neigung des zumindest einen Rahmenteils gegenüber dem Boden derart durch den Aktor eingestellt, dass es näherungsweise parallel zur Neigung des Bodens ausgerichtet ist. Auf diese Weise kann besonders effizient erreicht werden, dass die Werkzeuge am betreffenden Rahmenteil im Wesentlichen denselben Abstand zum Boden bzw. dieselbe Eindringtiefe in den Boden haben, was zu einer besonders homogenen Bodenbearbeitung führt. Die Neigung des Bodens kann dabei auf unterschiedliche Weisen bestimmt und die Neigung des Rahmenteils auf unterschiedliche Weisen eingestellt werden. Alternativ kann auch statt der relativen Neigung des Rahmenteils in Bezug auf den Boden der Abstand des Rahmenteils, vorzugsweise an verschiedenen Stellen des Rahmenteils, bestimmt und aus dieser Information die Neigung oder die Höhe des Rahmenteils eingestellt werden.

Vorzugsweise ist das Bodenbearbeitungsgerät ein Bodenbearbeitungsgerät, wie es vorstehend beschrieben wurde. Das Verfahren lässt sich aber grundsätzlich auch auf andere Bodenbearbeitungsgeräte anwenden.

In einer bevorzugten Ausführungsform des oben beschriebenen Systems ist die Steuervorrichtung dazu ausgebildet ist, das hierin beschriebene Verfahren auszuführen.

Weitere bevorzugte Merkmale und Vorteile der Erfindung und ihrer besonderen Ausführungsformen ergeben sich aus der nachfolgenden Figurenbeschreibung und der Gesamtheit der Ansprüche.
- Fig. 1: ist eine perspektivische schräge Rückansicht einer bevorzugten Ausführungsform eines Bodenbearbeitungsgeräts zum Anbau an eine landwirtschaftliche Maschine.
- Fig. 2: zeigt die Ausführungsform aus Fig. 1 in einer perspektivischen schrägen Vorderansicht.
- Fig. 3a-3c: zeigen eine schematische Darstellung der Funktionsweise einer bevorzugten Ausführungsform.
- Fig. 4a-4c: zeigen eine konkrete Darstellung der Ausführungsform aus Fig. 3a-3c.

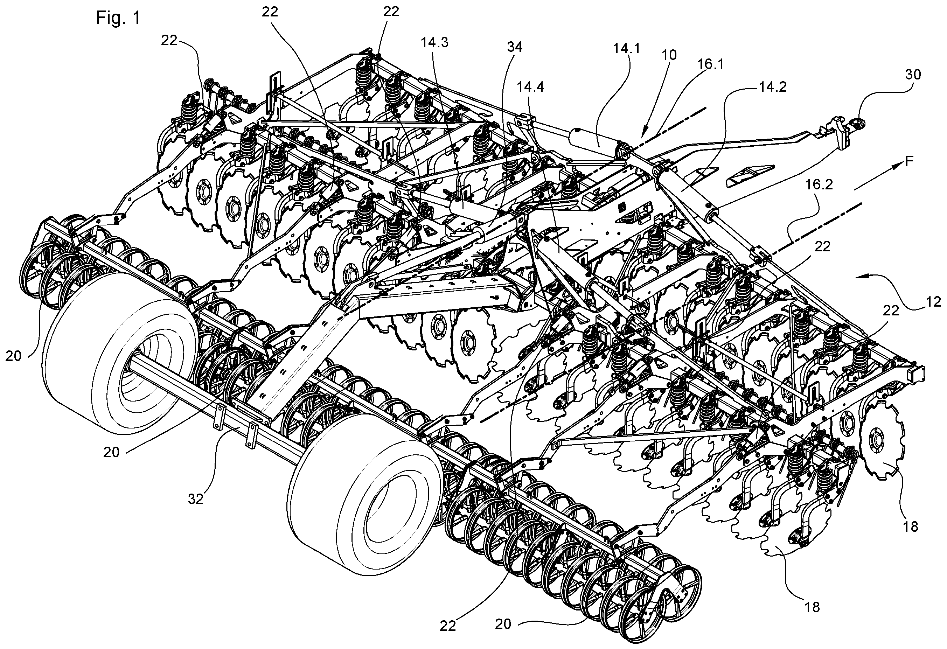

Figur 1 zeigt eine bevorzugte Ausführungsform eines Bodenbearbeitungsgeräts 10 zum Anbau an eine landwirtschaftliche Maschine. Die landwirtschaftliche Maschine ist bei der vorliegenden Ausführungsform vorzugsweise ein Schlepper, der jedoch in den Figuren nicht dargestellt ist. Der Schlepper wird über eine Kupplung 30 mit dem Bodenbearbeitungsgerät 10 verbunden, um dieses sowohl für die Bodenbearbeitung als auch zum Transport zu ziehen.

Wenn das Bodenbearbeitungsgerät 10 vom Schlepper zum Transport z.B. über eine öffentliche Straße gezogen wird, befindet sich das Bodenbearbeitungsgerät 10 üblicherweise in seiner Transportstellung, die in den vorliegenden Figuren nicht dargestellt ist. In der Transportstellung sind insbesondere auf einer separaten Achse 32 gelagerte Räder abgesenkt, um das Gewicht des Bodenbearbeitungsgeräts 10 zu tragen, soweit das Bodenbearbeitungsgerät 10 nicht vom Schlepper getragen wird. Das Bodenbearbeitungsgerät 10 kann somit sicher auf einer öffentlichen Straße transportiert werden, ohne die Straße zu beschädigen und ohne Begleitfahrzeuge oder Sondergenehmigungen für Überbreite oder dergleichen zu benötigen. Um einen Teil seines Gewichts auf diese Räder zu übertragen, weist das Bodenbearbeitungsgerät 10 einen Hydraulikzylinder 34 auf, mit dem die Achse 32 und die Räder abgesenkt oder angehoben werden können.

Figur 1 zeigt die Arbeitsposition des Bodenbearbeitungsgeräts 10. Das Bodenbearbeitungsgerät 10 weist einen Rahmen 12 auf, der in der vorliegenden Ausführungsform drei quer zu einer Fahrtrichtung F des Bodenbearbeitungsgeräts 10 benachbart angeordnete Rahmenteile 12.1, 12.2, 12.3 aufweist. Diese Rahmenteile 12.1, 12.2, 12.3 werden vorliegend durch ein Mittelteil 12.2, ein linkes Seitenteil 12.1 und ein rechtes Seitenteil 12.3 gebildet. Es ist jedoch auch möglich, das Bodenbearbeitungsgeräte 10 aus nur zwei Rahmenteilen oder mehr als drei Rahmenteilen aufzubauen.

Der Rahmen 12 kann in der vorliegenden Ausführungsform durch vier Hydraulikzylinder 14.1, 14.2, 14.3, 14.4 bei entsprechender Betätigung durch den Bediener zwischen der dargestellten Arbeitsposition und einer Transportposition umgestellt werden. In der hier dargestellten Arbeitsposition sind alle Hydraulikzylinder 14.1 bis 14.4 nahezu vollständig ausgefahren, so dass sich die drei Rahmenteile 12.1 - 12.3 im Wesentlichen horizontal erstrecken und quer zur Fahrtrichtung F eine maximale Ausdehnung aufweisen, um einen möglichst großen Bearbeitungsbereich abzudecken. Je breiter die Arbeitsbreite des Bodenbearbeitungsgeräts 10 ist, desto weniger Fahrten sind erforderlich, um mit dem Bodenbearbeitungsgerät den Boden eines Felds oder dergleichen zu bearbeiten.

Um den Rahmen zwischen der Arbeitsposition und der Transportposition umzustellen, werden das linke Seitenteil 12.1 und das rechte Seitenteil 12.3 durch Kippen in eine im wesentlichen vertikale Ausrichtung aufgerichtet, wobei die Kippbewegung durch die Hydraulikzylinder 14.1 - 14.4 bewirkt wird und um im Wesentlichen parallel zur Fahrtrichtung F verlaufende Drehachsen 16.1, 16.2 stattfindet. An diesen Drehachsen 16.1, 16.2 sind die einzelnen Rahmenteile 12.1 - 12.3 benachbart zueinander angeordnet. Hier liegt also der Übergang zwischen dem linken Seitenteil 12.1 und dem Mittelteil 12.2 bzw. zwischen dem rechten Seitenteil 12.3 und dem Mittelteil 12.2.

Jedes der Rahmenteile 12.1 - 12.3 umfasst eine Vielzahl Hohlscheiben 18, die ein Beispiel für ein Werkzeug zur Bodenbearbeitung in der vorliegenden Ausführungsform sind. Neben Hohlscheiben sind auch alle möglichen anderen Werkzeuge zur Bodenbearbeitung denkbar, insbesondere Grubberzinken. Die Hohlscheiben 18 sind an ihrem jeweiligen Rahmenteil 12.1 - 12.3 derart befestigt, dass ein Anheben oder Absenken der Rahmenteile 12.1, 12.3 auch ein entsprechendes Anheben oder Absenken des Werkzeugs, hier also der Hohlscheiben 18 an diesem Rahmenteil 12.1, 12.3, bewirkt. Durch Anheben und Absenken des Rahmenteils 12.1, 12.3 kann somit die Position des jeweiligen Werkzeugs, hier der Hohlscheibe 18, in vertikaler Richtung eingestellt werden.

Zusätzlich zu den Hohlscheiben 18 weisen die Rahmenteile 12.1 - 12.3 auch noch Nachlaufwalzen 20 auf. Die Nachlaufwalzen 20 dienen in der vorliegenden Ausführungsform insbesondere der Rückverfestigung des durch die Hohlscheiben 18 aufgelockerten Bodens. Gemäß der vorliegenden Erfindung sind die Nachlaufwalzen 20 derart gelagert, dass sie in vertikaler Richtung gegenüber dem jeweiligen Rahmenteil 12.1 - 12.3 beweglich gelagert sind, so dass sie sich relativ zum Rahmenteil 12.1 - 12.3 auf und ab bewegen und sich auch neigen können. Die jeweilige vertikale Position und die Neigung der Nachlaufwalzen 20 wird dabei durch einen Tiefenverstellzylinder 22 bestimmt, der durch die Nachlaufwalze 20 angelenkt wird.

In der vorliegenden Ausführungsform weist jedes der Rahmenteile 12.1 - 12.3 zwei Tiefenverstellzylinder 22 auf, die an gegenüberliegenden Endabschnitten des jeweiligen Rahmenteils 12.1 - 12.3 angeordnet sind. Die Nachlaufwalzen 20 sind in der vorliegenden Ausführungsform nicht nur parallel zum jeweiligen Seitenteil 12.1 - 12.3 vertikal verschiebbar, sondern können auch nur einseitig vertikal bewegt werden, das heißt ihre Ausrichtung aus einem zum jeweiligen Seitenteil parallelen in einen nicht parallelen Zustand versetzen, indem sie sich der Kontur des Bodens folgend neigen. Auf diese Weise ist es möglich, dass die Nachlaufwalze 20 über die Tiefenverstellzylinder 22 eine Information über die relative Ausrichtung, d.h. der Neigung, des Bodens unter der Nachlaufwalze 20 gegenüber der Ausrichtung, d.h. der Neigung, des jeweiligen Rahmenteils 12.1 - 12.3 abgibt. Alternativ können auch mehr oder weniger Nachlaufwalzen 20 vorgesehen sein und die Nachlaufwalzen 20 müssen nicht an den Rahmenteilen 12.1 - 12.3 angebracht sein, sondern können auch getrennt von den Rahmenteilen 12.1 - 12.3 gelagert sein, solange jedem Rahmenteil 12.1 - 12.3 eine oder mehrere Nachlaufwalzen zumindest teilweise zugeordnet ist. Dies kann beispielsweise auch durch zwei Nachlaufwalzen 20 erfolgen.

Auf der Grundlage der Information über die Neigung der Nachlaufwalze 20 gegenüber dem jeweiligen Rahmenteil 12.1 - 12.3 wird über die Hydraulikzylinder 14.1 - 14.4 eines oder mehrere der Rahmenteile 12.1, 12.3 gegenüber dem benachbarten Mittelteil 12.2 gekippt, d.h. so wie bei der Bewegung zwischen der Arbeitsstellung und der Transportstellung bewegt. Dabei ist das Ausmaß der Bewegung jedoch nur entsprechend der Neigung des Bodens unter dem jeweiligen Rahmenteil 12.1, 12.3. Mit anderen Worten passt sich die Neigung des jeweiligen Rahmenteils 12.1, 12.3 an die Neigung des darunterliegenden Bodens an.

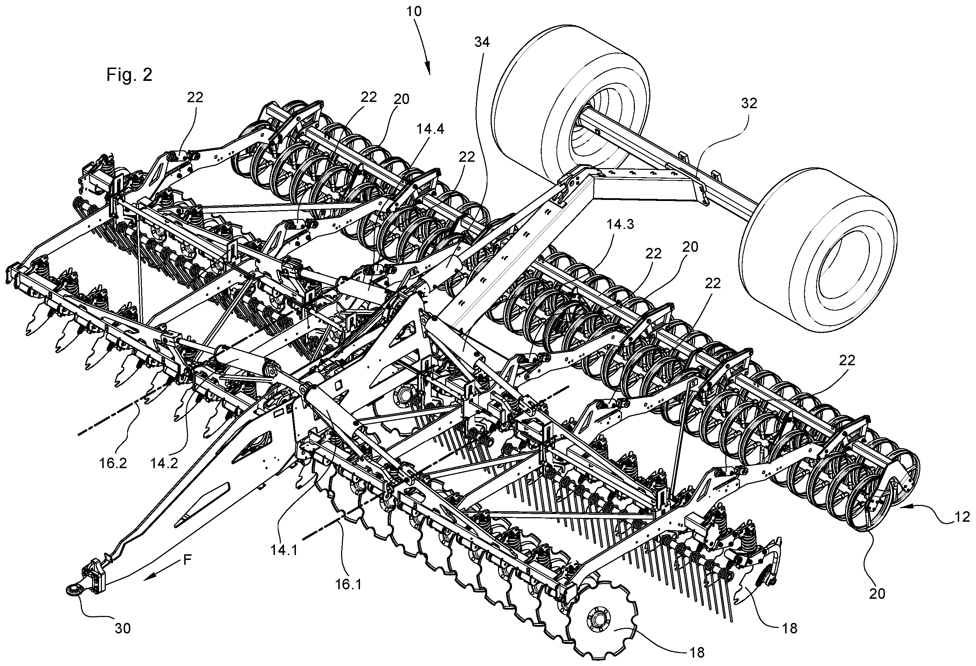

Figur 1 zeigt eine perspektivische Darstellung einer Ausführungsform des Bodenbearbeitungsgeräts 10 von rechts hinten. Figur 2 zeigt dieselbe Ausführungsform von links vorne, sodass hinsichtlich der in Figur 2 gezeigten Elemente, welche dieselben Bezugszeichen wie in Figur 1 aufweisen, auf die obige Beschreibung der Figur 1 verwiesen wird.

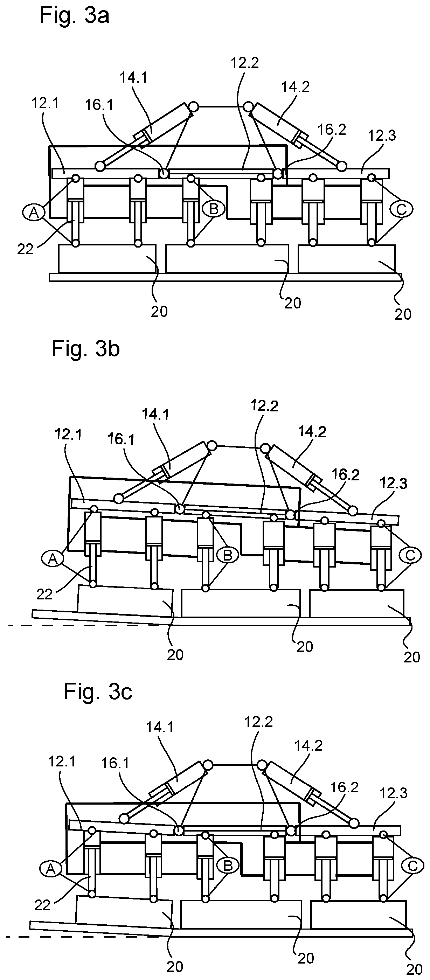

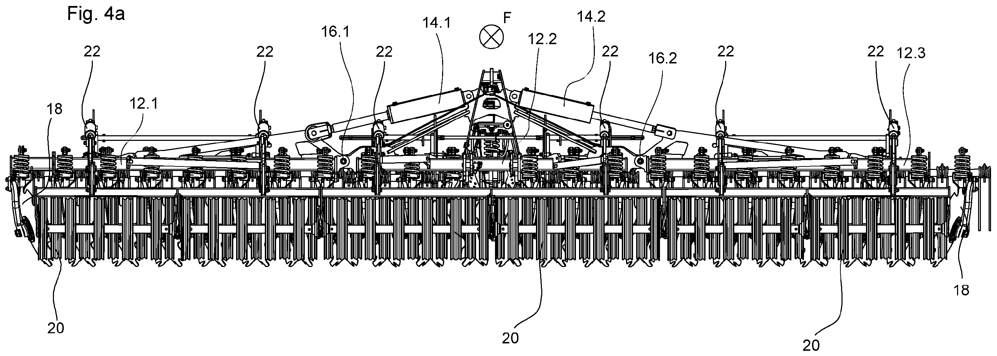

Figuren 3a - 3c zeigen eine schematisch Darstellung der Arbeitsweise einer bevorzugten Ausführungsform der Erfindung, wie sie beispielsweise in Figuren 1 und 2 dargestellt ist. Die in Figuren 1 und 2 verwendeten Bezugszeichen werden auch in Figuren 3a - 3c und 4a - 4c, die im Anschluss beschrieben werden, verwendet.

Figur 3a zeigt, wie die Nachlaufwalzen 20 über Tiefenverstellzylinder 22 an den Rahmenteilen 12.1 - 12.3 gelagert sind. Die Tiefenverstellzylinder 22 der rechten Hälfte in Figur 3a sind dabei als "Master" ausgeführt, während diejenigen Tiefenverstellzylinder 22, die sich auf der linken Hälfte der Figuren 3a - 3c befinden, als "Slave" Zylinder ausgebildet sind. Figuren 3a - 3c zeigen entsprechend auch eine schematische Darstellung der hydraulischen Koppelung der Tiefenverstellzylinder auf der linken und der rechten Seite.

Ferner sind in den Figuren 3a - 3c zwei Hydraulikzylinder 14.1 und 14.2 dargestellt, die zum Anheben beziehungsweise Absenken des linken beziehungsweise rechten Rahmenteils 12.1, 12.3 gegenüber dem Mittelteil 12.2 angeordnet und ausgestaltet sind.

Figur 3a zeigt einen Zustand, in dem das Bodenbearbeitungsgerät 10 über eine ebene Fläche gezogen wird. Dies lässt sich daran erkennen, dass alle drei Nachlaufwalzen 20 auf dem Boden aufliegen, alle sechs Tiefenverstellzylinder 22 gleichweit ausgefahren sind und die drei Rahmenteile 12.1 - 12.3 parallel zueinander horizontal ausgerichtet sind, was sich auch in gleichen Ausfahrpositionen der beiden Hydraulikzylinder 14.1 und 14.2 zum Umstellen der Rahmenteile 12.1 und 12.3 zeigt.

Figur 3b zeigt einen Zustand, in dem der Boden auf der linken Seite gegenüber der Mitte und der rechten Seite leicht geneigt ist. Diese Neigung wird auf die linke Nachlaufwalze 20 übertragen. Hieraus folgt, dass die beiden Tiefenverstellzylinder 22 auf der linken Seiten der Figur 3b, also diejenigen Tiefenverstellzylinder 22, welche die linke Nachlaufwalze 20 mit dem linken Seitenteil 12.1 verbinden, unterschiedlich eingefahren sind. Da durch den geneigten Boden im in Figur 3b gezeigten Zustand das gesamt Bodenbearbeitungsgerät 10 leicht nach rechts geneigt wird, sind auch die Einfahrtzustände der Tiefenverstellzylinder 22 der mittleren Nachlaufwalze 20 und der rechten Nachlaufwalze 20 unterschiedlich zueinander. Durch die Einfahrzustände der beiden linken Tiefenverstellzylinder 22 wird jedoch klar, dass der Boden auf der linken Seite nur oder zumindest stärker geneigt ist als auf der rechten Seite.

Um das Anbauberät an die Kontur des Bodens anzupassen, wird, wie in Figur 3c gezeigt ist, der linke Hydraulikzylinder 14.1 weiter eingefahren, als der rechte Hydraulikzylinder 14.2. Dies führt dazu, dass das linke Seitenteil 12.1 um die Drehachse 16.1 gekippt wird, so dass die daran angeordneten Tiefenverstellzylinder 22 der linken Nachlaufwalze 22 wieder in einen Zustand gelangen, in dem sie im Wesentlichen gleich weit ausgefahren sind. Gleichzeitig führt diese Bewegung auch dazu, dass das Mittelteil 12.2 und das rechte Seitenteil 12.3 wieder horizontal ausgerichtet sind und damit parallel zu den jeweiligen Nachlaufwalzen 20 verlaufen, sodass auch die rechten vier Tiefenverstellzylinder 22 gleich weit eingefahren sind.

Figur 3c zeigt also einen Zustand, in dem das Arbeitsfeld des Bodenbearbeitungsgeräts 10 an die Kontur des Bodens angepasst ist.

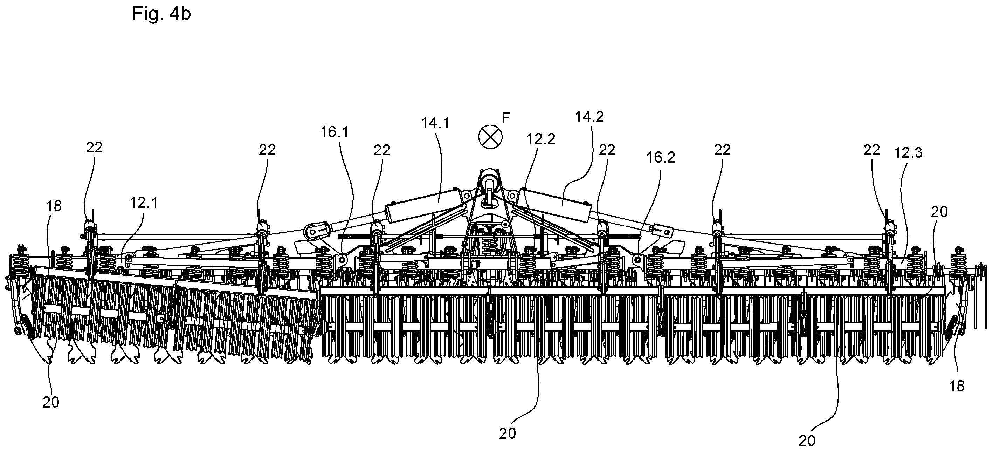

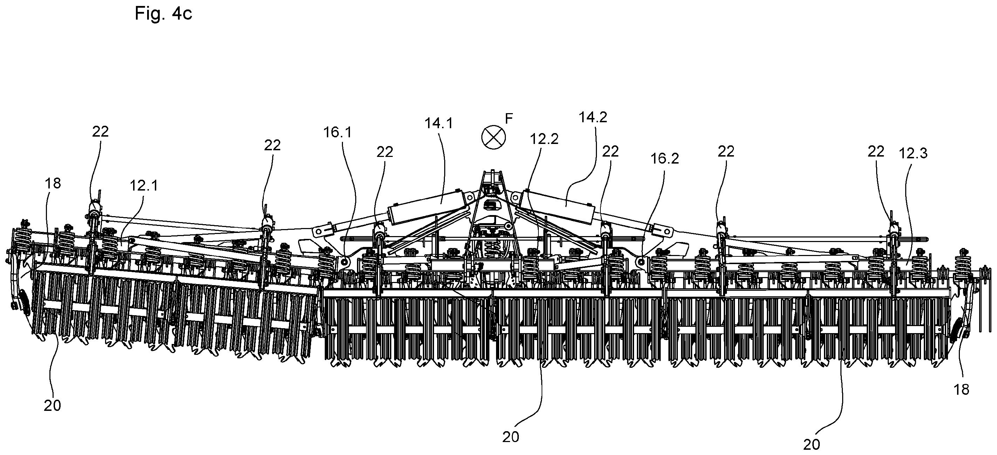

Die Figuren 4a - 4c entsprechen den Figuren 3a - 3c, wobei hier auf das Bespiel der Ausführungsform der Figuren 1 und 2 Bezug genommen wird. Das bedeutet, dass als Werkzeug Hohlscheiben 18 einer Scheibenegge mit entsprechenden Nachlaufwalzen 20 verwendet werden. Figur 4a zeigt den Zustand der Figur 3a, Figur 4b zeigt den Zustand der Figur 3b und Figur 4c zeigt den Zustand der Figur 3c, jeweils bei einem Bodenbearbeitungsgerät 10 gemäß den Figuren 1 und 2.

Die oben dargestellte Ausführungsform ermöglicht es, über die Drehachsen 16.1, 16.2, die auch zum Umstellen des Rahmens 12 aus der Arbeitsposition in die Transportposition benötigt werden, eine Anpassung an die Kontur des Bodens zu realisieren. Die Werkzeuge, das heißt Holscheiben 18 in der vorliegenden Ausführungsform, werden durch den mehrteiligen Rahmen 12 so geführt, dass eine gleichmäßige Bodenbearbeitung erfolgen kann.

Das Anheben bzw. Absenken der jeweiligen Rahmenteile 12.1, 12.3 kann mit Hilfe einer externen Regelung oder Steuerung erfolgen und hydraulisch unterstützt sein. Die relative Höhe der Nachlaufwalzen 20 zum Rahmen 12 wird an einer oder vorzugsweise mehreren Stellen gemessen und auf der Grundlage dieser Werte die Hydraulikzylinder 14.1 - 14.4, die als Klappzylinder zum Umstellen des Rahmes zwischen der Arbeitsposition und der Transportposition ausgestaltet sind, so verfahren, dass sich das Bodenbearbeitungsgerät 10 bestmöglich an die Kontur des Bodens anpasst.

Alternativ zu einer externen Regelung mit hydraulischer Unterstützung ist es auch denkbar, eine rein hydraulische Regelung vorzusehen. Hierfür müssten die Tiefenverstellzylinder 22 mit den Klappzylindern 14.1, 14.2 so gekoppelt werden, dass eine automatische Regelung der Ausrichtung der Rahmenteile 12.1 und 12.3 auf Grundlage der Einfahrzustände der Tiefenverstellzylinder 22 erfolgt.

Durch die zuvor illustrierte Ausführungsform ist es außerdem möglich, einen gleichmäßigen Druck durch die Nachlaufwalzen 20 auf den Boden auszuüben, wodurch eine homogene Rückverfestigung des Bodens erfolgt. Ferner können die Positionen und damit der Abstand bzw. die Eindringtiefe der Arbeitswerkzeuge, beispielsweise der Hohlscheiben 18, Grubberzinken oder Rollhacken, an das Bodenprofil angepasst werden. Dies ermöglicht eine besonders homogene Bodenbearbeitung.

Gegenüber komplizierteren Lösungen zur Anpassung der Kontur der Arbeitsposition eines Bodenbearbeitungsgeräts an das Bodenprofil ermöglicht das oben beschriebene Bodenbearbeitungsgerät 10 eine einfache Rahmengestaltung, weil keine zusätzlichen Gelenkpunkte oder Aktoren über die für das Umstellen zwischen Transportposition und Arbeitsposition ohnehin vorhandenen hinaus erforderlich sind. Somit ist es durch die vorliegende Erfindung möglich, die Gelenkpunkte und Scharniere, die für das Umstellen zwischen Arbeitsposition und Transportposition bereits vorhanden sind, auch für die Anpassung an die Bodenkontur zu nutzen.

In diesem Zusammenhang ist noch zu bemerken, dass das erfindungsgemäße Konzept auf grundsätzlich beliebige Arbeitsbreiten und beliebige Anzahlen von Rahmenteilen erweiterbar ist, das heißt nicht auf die dreiteilige Rahmenkonstruktion gemäß der oben beschriebenen Ausführungsform beschränkt ist.

Insbesondere im Zusammenhang mit Scheibeneggen bestand im Stand der Technik das Problem erheblicher Seitenkräfte der Hohlscheiben. Diese unkalkulierbaren Seitenkräfte haben im Stand der Technik dazu geführt, dass eine Pendelaufhängung, wie sie bisher schon bei zweiteiligen Rahmen bekannt war, nicht auf dreiteilige oder mehrteilige Rahmen übertragen werden konnte. Bei der vorliegenden Erfindung und insbesondere der oben beschrieben Ausführungsform haben die Seitenkräfte der Werkzeuge hingegen keinen Einfluss auf die Regelung und den Druck der Nachlaufwalzen und behindern daher nicht die Anpassung des Bodenbearbeitungsgeräts an das Bodenrelief.

Insbesondere die äußeren Arbeitswerkzeuge können durch die Erfindung und insbesondere bei der vorliegenden Ausführungsform immer ideal tief arbeiten und ermöglichen dadurch ein besseres Anschlussverhalten als im Stand der Technik. Dies führt zu einer homogeneren Bearbeitung nicht nur innerhalb der Arbeitsbreite des Bodenbearbeitungsgeräts, sondern auch zwischen benachbarten Bearbeitungsstreifen, die jeweils durch ein Bodenbearbeitungsgerät bearbeitet werden.

## Patentansprüche

1. Bodenbearbeitungsgerät (10) zum Anbau an eine landwirtschaftliche Maschine mit
einem Rahmen (12), der zumindest zwei quer zu einer Fahrtrichtung (F) des Bodenbearbeitungsgeräts (10) benachbart angeordnete Rahmenteile (12.1, 12.2, 12.3) aufweist,
wobei der Rahmen (12) durch zumindest einen Aktor (14.1, 14.2, 14.3, 14.4) zwischen einer Arbeitsposition und einer Transportposition umstellbar ist, indem zumindest eins der Rahmenteile (12.1, 12.2, 12.3) zwischen einer abgesenkten Stellung und einer angehobenen Stellung um eine Drehachse (16.1, 16.2) kippbar ist, um in der Transportposition eine quer zur Fahrtrichtung (F) kleinere Ausdehnung des Bodenbearbeitungsgeräts (10) als in der Arbeitsposition aufzuweisen, wobei
die Rahmenteile (12.1, 12.2, 12.3) jeweils zumindest ein Werkzeug (18) zur Bodenbearbeitung aufweisen und jeweils zumindest einer Abstandsbestimmungsvorrichtung (20, 22) zum Bestimmen eines Abstands des Werkzeugs (18) zum Boden oder einer Eindringtiefe des Werkzeugs (18) in den Boden zugeordnet sind und
**dadurch gekennzeichnet, dass**
das Bodenbearbeitungsgerät (10) dazu ausgestaltet ist, auf Grundlage des bestimmten Abstandes bzw. der bestimmten Eindringtiefe zumindest eins der Rahmenteile (12.1, 12.2, 12.3) derart durch den Aktor (14.1, 14.2, 14.3, 14.4) anzuheben oder abzusenken, dass der Abstand oder die Eindringtiefe einen vorbestimmten Wert annimmt.

2. Bodenbearbeitungsgerät (10) nach Anspruch 1, wobei die Rahmenteile (12.1, 12.2, 12.3) zumindest drei Rahmenteile, nämlich ein Mittelteil (12.2), ein linkes Seitenteil (12.1) und ein rechtes Seitenteil (12.3), aufweisen,
wobei das Mittelteil (12.2) bezogen auf die Fahrtrichtung (F) zentral angeordnet ist, das linke Seitenteil (12.1) bezogen auf die Fahrtrichtung (F) links vom Mittelteil (12.2) angeordnet ist und das rechte Seitenteil (12.3) bezogen auf die Fahrtrichtung (F) rechts vom Mittelteil (12.2) angeordnet ist,
wobei der Rahmen (12) durch zumindest zwei Aktoren (14.1, 14.2, 14.3, 14.4) zwischen der Arbeitsposition und der Transportposition umstellbar ist, indem das linke Seitenteil (12.1) und das rechte Seitenteil (12.3) zwischen der abgesenkten Stellung und der angehobenen Stellung um jeweils eine Drehachse (16.1, 16.2) kippbar sind.

3. Bodenbearbeitungsgerät (10) nach einem der vorhergehenden Ansprüche, wobei die Rahmenteile (12.1, 12.2, 12.3) jeweils mehrere quer zur Fahrtrichtung (F) beabstandet angeordnete Werkzeuge (18) zur Bodenbearbeitung aufweisen und wobei die Abstandsbestimmungsvorrichtung (20, 22) dazu ausgebildet ist, den Abstand oder die Eindringtiefe zumindest zweier der Werkzeuge (18) eines Rahmenteils (12.1, 12.2, 12.3), bevorzugt aller Werkzeuge (18), näherungsweise, bevorzugt mechanisch, zu bestimmen,
wobei die Abstandsbestimmungsvorrichtung (20, 22) bevorzugt eine gegenüber dem jeweiligen Rahmenteil (12.1, 12.2, 12.3) vertikal bewegliche Walze (20), insbesondere eine Nachlaufwalze, aufweist.

4. Bodenbearbeitungsgerät (10) nach einem der vorhergehenden Ansprüche, wobei die Abstandsbestimmungsvorrichtung (20, 22) dazu ausgebildet ist, eine Neigung des Bodens gegenüber zumindest einem der Rahmenteile (12.1, 12.2, 12.3) zumindest näherungsweise zu bestimmen.

5. Bodenbearbeitungsgerät (10) nach einem der vorhergehenden Ansprüche, wobei die Abstandsbestimmungsvorrichtung (20, 22) einen, bevorzugt mehrere, Arbeitszylinder (22), insbesondere Hydraulikzylinder, aufweist.

6. Bodenbearbeitungsgerät (10) nach einem der vorhergehenden Ansprüche, wobei der Aktor (14.1, 14.2, 14.3, 14.4) einen Arbeitszylinder (14.1, 14.2, 14.3, 14.4), insbesondere einen Hydraulikzylinder, umfasst.

7. Bodenbearbeitungsgerät (10) nach einem der vorhergehenden Ansprüche, wobei das Bodenbearbeitungsgerät eine Egge wie eine Scheibenegge, insbesondere eine Kurzscheibenegge, oder eine Kreiselegge, ein Grubber, eine Saatbeetkombination oder ein Aussaatgerät wie eine Sämaschine, eine Einzelkornsämaschine oder eine Drillmaschine, ein Mulcher oder eine Rollhacke ist.

8. Bodenbearbeitungsgerät (10) nach einem der vorhergehenden Ansprüche, wobei das Werkzeug (18) eine Hohlscheibe, eine Rollhacke, oder ein Grubberzinken ist.

9. Bodenbearbeitungsgerät (10) nach einem der vorhergehenden Ansprüche, wobei der Aktor (14.1, 14.2, 14.3, 14.4) einen Hydraulikzylinder umfasst und die Abstandsbestimmungsvorrichtung (20, 22) einen Hydraulikzylinder (22) umfasst,
wobei der Hydraulikzylinder des Aktors (14.1, 14.2, 14.3, 14.4) und der Hydraulikzylinder (22) der Abstandsbestimmungsvorrichtung (20, 22) derart miteinander hydraulisch gekoppelt sind, dass das zumindest eine Rahmenteil (12.1, 12.2, 12.3) immer so angehoben oder abgesenkt wird, dass der Abstand oder die Eindringtiefe konstant bleibt.

10. System aus einer landwirtschaftlichen Maschine und einem Bodenbearbeitungsgerät (10) nach einem der vorhergehenden Ansprüche, das ferner eine Steuervorrichtung aufweist,
**dadurch gekennzeichnet, dass**
die Steuervorrichtung dazu ausgebildet ist, Daten der Abstandsbestimmungsvorrichtung (20, 22) zu empfangen und Daten an den Aktor (14.1, 14.2, 14.3, 14.4) zu senden, um den Aktor (14.1, 14.2, 14.3, 14.4) auf Grundlage des bestimmten Abstandes bzw. der bestimmten Eindringtiefe derart zu betätigen, dass das zumindest eine der Rahmenteile (12.1, 12.2, 12.3) angehoben oder abgesenkt wird, um den lokalen Abstand des Rahmenteils (12.1, 12.2, 12.3) zum Boden einzustellen, vorzugsweise einen vorbestimmten lokalen Abstand zu halten.

11. Verfahren zum Betreiben eines an eine landwirtschaftliche Maschine angebauten Bodenbearbeitungsgeräts (10) mit
einem Rahmen (12), der zumindest zwei Rahmenteile (12.1, 12.2, 12.3) und zumindest einen Aktor (14.1, 14.2, 14.3, 14.4) aufweist, um zumindest eins der Rahmenteile (12.1, 12.2, 12.3) anzuheben oder abzusenken, um den Rahmen (12) dadurch zwischen einer Arbeitsposition und einer Transportposition, in der das Bodenbearbeitungsgerät (10) eine quer zu einer Fahrtrichtung (F) kleinere Ausdehnung als in der Arbeitsposition aufweist, umzustellen,
wobei die Rahmenteile (12.1, 12.2, 12.3) jeweils zumindest ein Werkzeug (18) zur Bodenbearbeitung aufweisen, wobei ein Abstand des Werkzeugs (18) zum Boden oder eine Eindringtiefe des Werkzeugs (18) in den Boden bestimmt wird , **dadurch gekennzeichnet, dass** zumindest eins der Rahmenteile (12.1, 12.2, 12.3) durch den Aktor (14.1, 14.2, 14.3, 14.4) auf Grundlage des bestimmten Abstandes bzw. der bestimmten Eindringtiefe derart angehoben oder abgesenkt wird, dass der Abstand oder die Eindringtiefe einen vorbestimmten Wert annimmt.

12. Verfahren nach Anspruch 11, wobei eine Neigung des zumindest einen Rahmenteils (12.1, 12.2, 12.3) gegenüber dem Boden derart durch den Aktor (14.1, 14.2, 14.3, 14.4) eingestellt wird, dass es näherungsweise parallel zur Neigung des Bodens ausgerichtet ist.

13. Verfahren Anspruch 11 oder 12, wobei das Bodenbearbeitungsgerät (10) ein Bodenbearbeitungsgerät nach einem der Ansprüche 1-9 ist.

14. System nach Anspruch 10, wobei die Steuervorrichtung dazu ausgebildet ist, das Verfahren nach einem der Ansprüche 11-13 auszuführen.

## Claims

1. A soil cultivation implement (10) for attachment an agricultural machine having a frame (12), which comprises at least two frame parts (12.1, 12.2, 12.3) arranged adjacently transversely to a travelling direction (F) of the soil cultivation implement (10), wherein the frame (12) can be changed over through at least one actuator (14.1, 14.2, 14.3, 14.4) between a working position and a transport position, in that at least one of the frame parts (12.1, 12.2, 12.3) can be tilted about an axis of rotation (16.1, 16.2) between a lowered position and a raised position, in order to have in the transport position a smaller extent of the soil cultivation implement (10) transversely to the travelling direction (F) than in the working position,
wherein the frame parts (12.1, 12.2, 12.3) each comprise at least one tool (18) for soil cultivation and are each assigned at least to one distance determination device (20, 22) for determining a distance of the tool (18) to the ground or a penetration depth of the tool (18) into the ground and
**characterised in that**
the soil cultivation implement (10) is configured, based on a certain distance or the certain penetration depth to raise or lower at least one of the frame parts (12.1, 12.2, 12.3) through the actuator (14.1, 14.2, 14.3, 14.4) in such a manner that the distance or the penetration depth assumes a predetermined value.

2. The soil cultivation implement (10) according to Claim 1, wherein the frame parts (12.1, 12.2, 12.3) comprise at least three frame parts, namely, a middle section (12.2), a left side part (12.1) and a right side part (12.3), wherein the middle section (12.2) based on the travelling direction (F) is arranged centrally, the left side part (12.1) based on the travelling direction (F) is arranged left of the middle section (12.2) and the right side part (12.3) based on the travelling direction (F) is arranged to the right of the middle section (12.2), wherein the frame (12) can be changed over by way of at least two actuators (14.1, 14.2, 14.3, 14.4) between the working position and the transport position in that the left side part (12.1) and the right side part (12.3) can be tilted between the lowered position and the raised position about an axis of rotation (16.1, 16.2) each.

3. The soil cultivation implement (10) according to any one of the preceding claims, wherein the frame parts (12.1, 12.2, 12.3) each comprise multiple tools (18) for soil cultivation arranged spaced apart transversely to the travelling direction (F) and wherein the distance determination device (20, 22) is designed for approximately determining the distance or the penetration depth at least of two of the tools (18) of a frame part (12.1, 12.2, 12.3), preferably of all tools (18), preferably mechanically, wherein the distance determination device (20) preferably comprises a roller (22) that is vertically moveable relative to the respective frame part (12.1, 12.2, 12.3), in particular a trailing roller.

4. The soil cultivation implement (10) according to any one of the preceding claims, wherein the distance determination device (20, 22) is designed for determining an inclination of the ground relative to at least one of the frame parts (12.1, 12.2, 12.3) at least approximately.

5. The soil cultivation implement (10) according to any one of the preceding claims, wherein the distance determination device (20, 22) comprises a, preferably multiple working cylinders (22), in particular hydraulic cylinders.

6. The soil cultivation implement (10) according to any one of the preceding claims, wherein the actuator (14.1, 14.2, 14.3, 14.4) includes a working cylinder (14.1, 14.2, 14.3, 14.4), in particular a hydraulic cylinder.

7. The soil cultivation implement (10) according to any one of the preceding claims, wherein the soil cultivation implement is a harrow such as a disc harrow, in particular a compact disc harrow, or a rotary harrow, a grubber, a seedbed combination, or a sowing device such as a sowing machine, an individual grain sowing machine, or a seed drill, a mulcher, or a rotary hoe.

8. The soil cultivation implement (10) according to any one of the preceding claims, wherein the tool (18) is a hollow disc, a rotary hoe, or a grubber tine.

9. The soil cultivation implement (10) according to any one of the preceding claims, wherein the actuator (14.1, 14.2, 14.3, 14.4) includes a hydraulic cylinder and the distance determination device (20, 22) includes a hydraulic cylinder (22), wherein the hydraulic cylinder of the actuator (14.1, 14.2, 14.3, 14.4) and the hydraulic cylinder (22) of the distance determination device (20, 22) are hydraulically coupled to one another in such a manner that the at least one frame part (12.1, 12.2, 12.3) is always raised or lowered so that the distance or the penetration depths remains constant.

10. A system of an agricultural machine and a soil cultivation implement (10) according to any one of the preceding claims, which further comprises a control device,
**characterised in that**
the control device is designed in order to receive data of the distance determination device (20, 22) and to send data to the actuator (14.1, 14.2, 14.3, 14.4) in order to actuate the actuator (14.1, 14.2, 14.3, 14.4) based on the determined distance or the determined penetration depth in such a manner that the at least one of the frame parts (12.1, 12.2, 12.3) is raised or lowered in order to adjust the local distance of the frame parts (12.1, 12.2, 12.3) to the ground, preferentially maintain a predetermined local distance.

11. A method for operating a soil cultivation implement (10) attached to an agricultural machine, having a frame (12) which comprises at least two frame parts (12.1, 12.2, 12.3) and at least one actuator (14.1, 14.2, 14.3, 14.4) in order to raise or lower at least one of the frame parts (12.1, 12.2, 12.3) to thereby change over the frame (12) between a working position and a transport position, in which the soil cultivation implement (10) has a smaller extent transversely to a travelling direction (F) than in the working position, wherein the frame parts (12.1, 12.2, 12.3) each comprise a tool (18) for soil cultivation, wherein a distance of the tool (18) to the ground or a penetration depth of the tool (18) into the ground is determined, **characterised in that** at least one of the frame parts (12.1, 12.2, 12.3) is raised or lowered through the actuator (14.1, 14.2, 14.3, 14.4) based on the determined distance or the determined penetration depth in such a manner that the distance or the penetration depth assumes a predetermined value.

12. The method according to Claim 11, wherein an inclination of the at least one frame part (12.1, 12,2, 12.3) relative to the ground is adjusted by way of the actuator (14.1, 14.2, 14.3, 14.4) in such a manner that it is approximately oriented parallel to the inclination of the ground.

13. The method according to Claim 11 or 12, wherein the soil cultivation implement (10) is a soil cultivation implement according to any one of the Claims 1-9.

14. A system according to Claim 10, wherein the control device is designed for carrying out the method according to any one of the Claims 11-13.

## Revendications

1. Engin (10) de travail du sol, destiné au montage sur une machine agricole, pourvu d'un cadre (12), qui comporte au moins deux parties (12.1, 12.2, 12.3) de cadre placées au voisinage à la transversale d'une direction de déplacement (F) de l'engin (10) de travail du sol, le cadre (12) pouvant être passé par au moins un actionneur (14.1, 14.2, 14.3, 14.4) entre une position de travail et une position de transport, en ce qu'au moins l'une des parties (12.1, 12.2, 12.3) de cadre sont susceptibles d'être basculées autour d'un axe de rotation (16.1, 16.2) dans une position abaissée et une position relevée, pour présenter dans la position de transport une extension de l'engin (10) de travail du sol inférieure à la transversale de la direction de déplacement (F) à celle dans la position de travail,
les parties (12.1, 12.2, 12.3) de cadre comportant chacune au moins un outil (18) de travail du sol et étant associées chacune à au moins un dispositif (20, 22) de détermination de l'écart, destiné à déterminer un écart de l'outil (18) par rapport au sol ou une profondeur de pénétration de l'outil (18) dans le sol et
**caractérisé en ce que**
l'engin (10) de travail du sol est conçu pour relever ou pour abaisser sur la base de l'écart déterminé ou de la profondeur de pénétration déterminée au moins l'une des parties (12.1, 12.2, 12.3) de cadre par l'actionneur (14.1, 14.2, 14.3, 14.4), de telle sorte que l'écart ou la profondeur de pénétration adopte une valeur prédéfinie.

2. Engin (10) de travail du sol selon la revendication 1, les parties (12.1, 12.2, 12.3) de cadre comportant au moins trois parties de cadre, à savoir une partie centrale (12.2), une partie latérale (12.1) gauche et une partie latérale (12.3) droite, la partie centrale (12.2) étant placée de manière centrale, en rapport à la direction de déplacement (F), la partie latérale (12.1) gauche étant placée à gauche de la partie centrale (12.2), en rapport à la direction de déplacement (F) et la partie latérale (12.3) droite étant placée à droite de la partie centrale (12.2), en rapport à la direction de déplacement (F), le cadre (12) étant réglable par au moins deux actionneurs (14.1, 14.2, 14.3, 14.4) entre la position de travail et la position de transport, en ce que la partie latérale (12.1) gauche et la partie latérale (12.3) droite sont susceptibles d'être basculées entre la position abaissée et la position relevée, autour de chaque fois un axe de rotation (16.1, 16.2).

3. Engin (10) de travail du sol selon l'une quelconque des revendications précédentes, les parties (12.1, 12.2, 12.3) de cadre comportant chacune plusieurs outils (18) pour le travail du sol placés avec un écart à la transversale de la direction de déplacement (F) et le dispositif (20, 22) de détermination de l'écart étant conçu pour déterminer approximativement, de préférence mécaniquement l'écart ou la profondeur de pénétration d'au moins deux des outils (18), de préférence de tous les outils (18) d'une partie de cadre (12.1, 12.2, 12.3), le dispositif (20, 22) de détermination de l'écart comportant de préférence un rouleau (20), notamment un rouleau suiveur déplaçable à la verticale par rapport à la partie de cadre (12.1, 12.2, 12.3) concernée.

4. Engin (10) de travail du sol selon l'une quelconque des revendications précédentes, le dispositif (20, 22) de détermination de l'écart étant conçu pour déterminer au moins approximativement une inclinaison du sol par rapport à au moins l'une des parties (12.1, 12.2, 12.3) de cadre.

5. Engin (10) de travail du sol selon l'une quelconque des revendications précédentes, le dispositif (20, 22) de détermination de l'écart comportant un, de préférence plusieurs cylindres de travail (22), notamment des cylindres hydrauliques.

6. Engin (10) de travail du sol selon l'une quelconque des revendications précédentes, l'actionneur (14.1, 14.2, 14.3, 14.4) comprenant un cylindre de travail (14.1, 14.2, 14.3, 14.4), notamment un cylindre hydraulique.

7. Engin (10) de travail du sol selon l'une quelconque des revendications précédentes, l'engin de travail du sol étant un déchaumeur, tel qu'un déchaumeur à disques, notamment un déchaumeur à disques compact ou un déchaumeur rotatif, un cultivateur, un semoir pneumatique combi ou un engin d'ensemencement, tel qu'un semoir, un semoir monograine ou un semoir en ligne, une hacheuse ou une houe rotative.

8. Engin (10) de travail du sol selon l'une quelconque des revendications précédentes, l'outil (18) étant un disque creux, une houe rotative ou une dent de cultivateur.

9. Engin (10) de travail du sol selon l'une quelconque des revendications précédentes, l'actionneur (14.1, 14.2, 14.3, 14.4) comprenant un cylindre hydraulique et le dispositif (20, 22) de détermination de l'écart comprenant un cylindre hydraulique (22), le cylindre hydraulique de l'actionneur (14.1, 14.2, 14.3, 14.4) et le cylindre hydraulique (22) du dispositif (20, 22) de détermination de l'écart étant hydrauliquement accouplés l'un avec l'autre, de telle sorte que l'au moins une partie de cadre (12.1, 12.2, 12.3) soit toujours relevée ou abaissée de manière à ce que l'écart ou la profondeur de pénétration reste constant(e).

10. Système, constitué d'un machine agricole et d'un engin (10) de travail du sol selon l'une quelconque des revendications précédentes, qui comporte par ailleurs un dispositif de commande,
**caractérisé en ce que**
le dispositif de commande est conçu pour réceptionner des données du dispositif (20, 22) de détermination de l'écart et pour envoyer des données à l'actionneur (14.1, 14.2, 14.3, 14.4), pour manœuvrer l'actionneur (14.1, 14.2, 14.3, 14.4) sur la base de l'écart déterminé ou de la profondeur de pénétration déterminée, de telle sorte que l'au moins une des parties (12.1, 12.2, 12.3) de cadre soit relevée ou abaissée, pour régler l'écart local de la partie de cadre (12.1, 12.2, 12.3) par rapport au sol, de préférence pour maintenir un écart local prédéfini.

11. Procédé opérationnel d'un engin (10) de travail du sol monté sur une machine agricole, pourvu d'un cadre (12), qui comporte au moins deux parties (12.1, 12.2, 12.3) de cadre et d'au moins un actionneur (14.1, 14.2, 14.3, 14.4), pour relever ou abaisser au moins l'une des parties (12.1, 12.2, 12.3) de cadre, pour faire passer le cadre (12) de ce fait entre une position de travail et une position de transport, dans laquelle l'engin (10) de travail du sol présente à la transversale d'une direction de déplacement (F) une extension inférieure à celle dans la position de travail, les parties (12.1, 12.2, 12.3) de cadre comportant chacune au moins un outil (18) pour le travail du sol, un écart de l'outil (18) par rapport au sol ou une profondeur de pénétration de l'outil (18) dans le sol étant déterminé(e), **caractérisé en ce qu'**au moins l'une des parties (12.1, 12.2, 12.3) de cadre est relevée ou abaissée par l'actionneur (14.1, 14.2, 14.3, 14.4) sur la base de l'écart déterminé ou de la profondeur de pénétration déterminée, de telle sorte que l'écart ou la profondeur de pénétration adopte une valeur prédéterminée.

12. Procédé selon la revendication 11, une inclinaison de l'au moins une partie de cadre (12.1, 12.2, 12.3) par rapport au sol étant réglée par l'actionneur (14.1, 14.2, 14.3, 14.4), de telle sorte qu'elle soit orientée approximativement à la parallèle de l'inclinaison du sol.

13. Procédé selon la revendication 11 ou 12, l'engin (10) de travail du sol étant un engin de travail du sol selon l'une quelconque des revendications 1 à 9.

14. Système selon la revendication 10, le dispositif de commande étant conçu pour réaliser le procédé selon l'une quelconque des revendications 11 à 13.
